# EUROPEAN PATENT APPLICATION

(11) **EP 2 120 191 A1**
(43) Date of publication of application: **18.11.2009**
(21) Application number: 08757527.0
(22) Date of filing: 28.05.2008
(51) Int. Cl.: G06Q 10/00, G06Q 20/00, G06Q 30/00

(54) **METHOD, SYSTEM AND DEVICE FOR REALIZING THE ELECTRONIC BILL**

(30) Priority: 07.06.2007 CN 200710108631
(71) Applicant: Huawei Technologies Co., Ltd., Shenzhen, Guangdong Province 518129 (CN)
(72) Inventor: FANG, Houbo, Shenzhen Guangdong Province 518129 (CN); LIU, Bo, Shenzhen Guangdong Province 518129 (CN); LU, Jiguang, Shenzhen Guangdong Province 518129 (CN); LI, Jianming, Shenzhen Guangdong Province 518129 (CN)
(74) Representative: Pfenning, Meinig & Partner GbR
(86) International application number: PCT/CN2008/071114
(87) International publication number: WO 2008/151541

(57) **Abstract**

A method for realizing the electronic bill includes that: the server allocating the stored unused bill to client-side; performing location computation according to the outputting bill request from the client-side, and determining the bill number and sending to the client-side; the server generating and storing the electronic counterfoil according to the fed back bill information after the bill is outputted by the client-side; associating the printed electronic bill with the electronic counterfoil, and making it sure that the bill number in the electronic counterfoil is consistent with that in the outputted bill. A system, a server and a client-side for realizing the electronic bill are provided. The electronic management for the bill is realized.

## Description

This application claims the benefits of a Chinese Patent Application No. 200710108631.5, entitled "METHOD, SYSTEM AND DEVICE FOR REALIZING THE ELECTRONIC BILL" and filed with the State Intellectual Property Office on June 07, 2007, the entirety of which is incorporated herein by reference.

### FIELD OF THE INVENTION

The present invention relates to the field of information technologies, and in particular, to a method, system and device for realizing an electronic bill.

### BACKGROUND OF THE INVENTION

In operating activities, an operator often needs to issue invoices for consumers. Invoices are the evidence for an operating manager to monitor and manage the operators. An invoice is generally in two pages, but some are in multiple pages. One page of the invoice issued by the operator to the consumer serves as evidence, and the other page serves as a counterfoil to be saved for checking income audit of the operator by the operating manager.

Conventionally, information of invoice receipt, issue and save is entered in an account manually, and invoice is printed in two pages or in multiple pages; and the operating manager does not enter the service income in an account according to the invoice value. This results in the following disadvantages.

1) Information of invoice receipt, issue and save are entered in an account manually, which causes an increasing workload;

2) invoice is printed in two pages or in multiple pages, which increases the operating cost and costs more manpower and material resources, for example, if consumers serviced by a certain operator amount to 7 million; 3.5 million invoices are provided to the consumers every month; and cost of each invoice counterfoil equals 0.35 RMB, then the operating cost will be increased each year by 14.7 million RMB, which equals the product of 3.5 million (the amount of invoices per month) and 0.35 (cost of each counterfoil) and 12 (the number of months). This may increase the operating cost of the operator. In another example, since a rule on the storage life of the invoice counterfoil is usually made by the operating manager, the operator has to spend a lot of manpower and material resources on collecting, trimming, binding, safekeeping and querying of the invoice counterfoils within the storage life, and to provide a dedicated location for safekeeping the invoice counterfoils; and

3) the operating manager does not enter the service income in an account according to the invoice value, which results in a nonstandard financial management which is not consistent with the development trend of E-tax declaration.

As stated above, the invoice in two pages or in multiple pages used conventionally causes waste of paper, thus increases the operating cost. Further, in the invoice management mode in prior art, management for the person issuing invoices and using invoices is not provided, which does not match with the development trend of E-tax declaration of the operator manager. Additionally, a heavy workload is caused by checking and verifying a large amount of invoice counterfoils manually, which is not adaptive to the trend of E-financial management.

### SUMMARY OF THE INVENTION

An embodiment of the invention provides a method for realizing an electronic bill so as to manage bills electronically, and thereby overcomes the disadvantage caused by the manual receipt, issue, save and check of the invoices.

A method for realizing an electronic bill in an embodiment of the invention includes,

distributing an unused bill to a client;

determining a bill number by performing, according to an output bill request sent from the client, location computing, and sending the bill number to the client;

generating an electronic counterfoil of the bill according to the bill from the client information returned after the client outputs the bill; and

associating the outputted bill with the electronic counterfoil to keep the bill number recorded in the electronic counterfoil to be consistent with the outputted bill number.

A method for realizing an electronic bill in an embodiment of the invention includes,

receiving, by a client, a bill distributed from a server;

generating, by the client, information of the bill after outputting the received bill; and

sending, by the client, the generated bill information to the server.

A system for realizing an electronic bill in an embodiment of the invention includes a client and a server; in particular,

the client is adapted to receive a bill distributed from a server, output the bill according to a request, and send bill information of the outputted bill to the server; and

the server is adapted to distribute the bill to the client, generate a corresponding electronic counterfoil according to the bill information received from the client and store, associate the bill outputted from the client with the electronic counterfoil, and keep a bill number recorded in the electronic counterfoil to be consistent with the outputted bill number.

A server for realizing an electronic bill in an embodiment of the invention includes a distributing module, a receiving module and a processing module; in particular,

the distributing module is adapted to distribute a bill to a client;

the receiving module is adapted to receive bill information of the outputted bill and send the bill information to the processing module; and

the processing module is adapted to generate a corresponding electronic counterfoil and store according to the bill information received by the receiving module.

A client for realizing an electronic bill in an embodiment of the invention includes a receiving module, a processing module and a sending module; in particular,

the receiving module is adapted to receive a distributed bill and send the distributed bill to the processing module;

the processing module is adapted to obtain bill information according to a request and output the bill, and send the outputted bill information to the sending module; and

the sending module is adapted to send the bill information of the outputted bill.

It can be seen from the above solution, the invoice in the embodiments of the invention is in one page and managed electronically, i.e. the related information of the invoice is stored in a configured database and updated according to the current status. The bill in one page may be printed and the related information of the invoice stored may be updated and/or queried in the process of receiving, issuing, saving and checking the bill, rather than checking the invoice counterfoil manually. Therefore, electronic management of bills may be achieved with the method, device and system according to the embodiments of the invention, thus removing the disadvantages in the process of receiving, issuing, saving and checking the invoice manually.

### BRIEF DESCRIPTION OF THE DRAWINGS

Figure 1 shows a structural diagram of an electronic invoice printed according to an embodiment of the invention;

Figure 2 shows a flowchart of a method for realizing an electronic invoice according to an embodiment of the invention;

Figure 3 shows a flowchart of a method for resource management of the electronic invoice according to an embodiment of the invention;

Figure 4 shows a flowchart of using an electronic invoice according to an embodiment of the invention;

Figure 5 shows a diagram of an associated structure between an electronic invoice and an electronic counterfoil according to an embodiment of the invention;

Figure 6 shows a structural diagram of an electronic invoice related information stored in a client to be printed according to an embodiment of the invention;

Figure 7 shows a structural diagram of storage of location log information for a login user according to an embodiment of the invention;

Figure 8 shows a sample diagram of the location log information for a login user stored in a client according to an embodiment of the invention;

Figure 9 shows a flowchart of a method for associating automatically an electronic invoice and an electronic counterfoil based on a client session mode according to an embodiment of the invention;

Figure 10 shows a diagram of an initial configuration sub-flow in a client session mode after user login according to an embodiment of the invention;

Figure 11 shows a flowchart of automatic location in printing an electronic invoice based on the client session mode configuration according to an embodiment of the invention;

Figure 12 shows a flowchart of saving location log record in client when the login user exists the system according to an embodiment of the invention;

Figure 13 shows a diagram of data structure stored in the location process configured in a server according to an embodiment of the invention;

Figure 14 shows an integral flowchart of invoice location in a server according to an embodiment of the invention;

Figure 15 shows a diagram of an initial configuration sub-flow based on a server electronic invoice location process mode after user login according to an embodiment of the invention;

Figure 16 shows a flowchart of automatic location in printing an electronic invoice based on the server electronic invoice location process mode according to an embodiment of the invention;

Figure 17 shows a diagram of storing login information sub-flow after a login user exits the electronic invoice system based on the server electronic invoice location process mode according to an embodiment of the invention;

Figure 18 shows a diagram of a system for realizing an electronic bill according to an embodiment of the invention;

Figure 19 shows a diagram of a client for realizing an electronic bill according to an embodiment of the invention; and

Figure 20 shows a diagram of a server for realizing an electronic bill according to an embodiment of the invention.

### DETAILED DESCRIPTION OF THE EMBODIMENTS

Hereinafter, for the purpose of an easy illustration, the electronic management for bills will be described in detail by taking the invoice as an example of a bill.

Compared to the invoice in prior art, the invoice in the embodiment of the present invention is in one page and managed electronically, i.e. the related information of the invoice is stored in a configured database and updated according to the current status of the invoice. The related information of the invoice may be updated and/or queried in the process of receiving, issuing, saving and checking the bill, rather than checking the invoice counterfoil manually.

In the embodiment of the present invention, an electronic invoice system is configured in a server, and related information of each invoice, such as invoice number, type, version number and status etc., are generated respectively as items of an invoice resource table and an electronic counterfoil table in the electronic invoice system. Then, the electronic invoice system in the server distributes the invoices to different clients according to configured conditions; the client prints the distributed invoice and hands in for cancellation, and interacts with the server to modify status information corresponding to the distributed and handed-in invoice recorded in the invoice resource table and the electronic counterfoil table in the electronic invoice system to be checked by the operating manager, thereby realizing the electronic management for invoices.

In the embodiment of the invention, the status of an electronic invoice includes unused, blank, printed and invalid, and so on. The types of status of the electronic invoice may also be extended according to the service requirement.

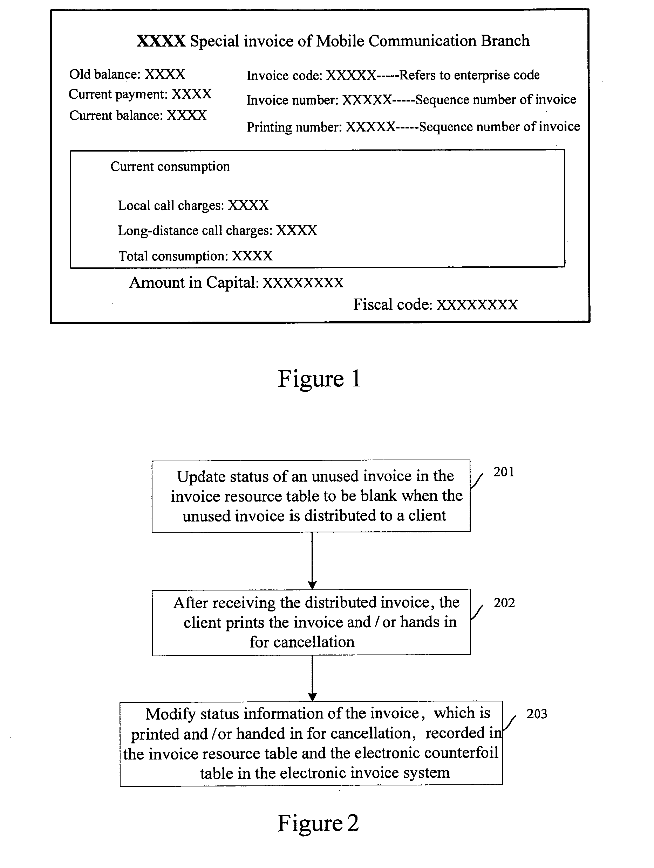

Figure 1 shows a structural diagram of a printed electronic invoice according to an embodiment of the invention. It is assumed that the invoice is an invoice of an mobile communication corporation, which includes the items of balance of the last period, current payment, current balance, invoice code, invoice number, printing number, current consumption, amount, and fiscal code; in which the items of the current consumption include local call charges, long-distance call charges and total consumption; and the item of amount in Capital is used. Compared to the prior art, the invoice in the embodiment of the present invention has a printing number and a fiscal code, in which the printing number should be consistent with the invoice number, so as to identify the corresponding electronic counterfoil stored in the electronic counterfoil table is correct; the fiscal code is an encrypted character string, the enabling of which is determined according to the negotiation between the operator and the operating manager, and the fiscal code plays a role of anti-forgery and may be optional.

Figure 2 shows a flowchart of a method for realizing an electronic invoice according to an embodiment of the invention, which particularly includes the following:

Step 201: An electronic invoice system is configured in a server; the system includes an invoice resource table and an electronic counterfoil table; in an item of the invoice resource table, information of the unused invoices are provided; status of an unused invoice in the invoice resource table is updated as blank after the unused invoice is distributed to a client.

Step 202: After receiving the distributed invoice, the client prints the invoice and/or hands in for cancellation the invoice.

Step 203: The client interacts with the server to modify status information of the printed invoice and/or the handed-in for cancellation invoice recorded in the invoice resource table and the electronic counterfoil table in the electronic invoice system.

In the embodiment of the invention, before printing the invoice, location computing of the printing number of the invoice to be printed should be performed;

if the printing number of the invoice to be printed is consistent with the press number on the invoice printing paper, printing is performed; otherwise, interaction with the server is required, i.e. printing is performed after the printing number of the invoice to be printed is adjusted to be consistent with the press number on the invoice printing paper in the electronic invoice system.

When a location computing is performed, a record regarding last printing of the invoice by the client is required as a location log record in the embodiment of the present invention, which may be stored in the database of the electronic invoice system, including the printing number of the printed invoice and the corresponding login user information. When determining the printing number of an invoice to be printed, the corresponding location log record is to be obtained from the database based on the user information of the login user, so that the printing number of the printed invoice is obtained, then after the printing number of the current invoice to be printed is calculated and compared with the press number on the invoice printing paper, the invoice is printed. The location computing in the embodiment of the present invention may be performed in the client or in the server.

In the embodiment, the processing flow of the electronic invoice system may be divided into three parts, i.e. a resource management flow of the electronic invoice, a usage flow of the electronic invoice and an automatic association flow between the electronic invoice and the electronic counterfoil, which will be described in detail hereinafter.

First part: resource management flow of the electronic invoice

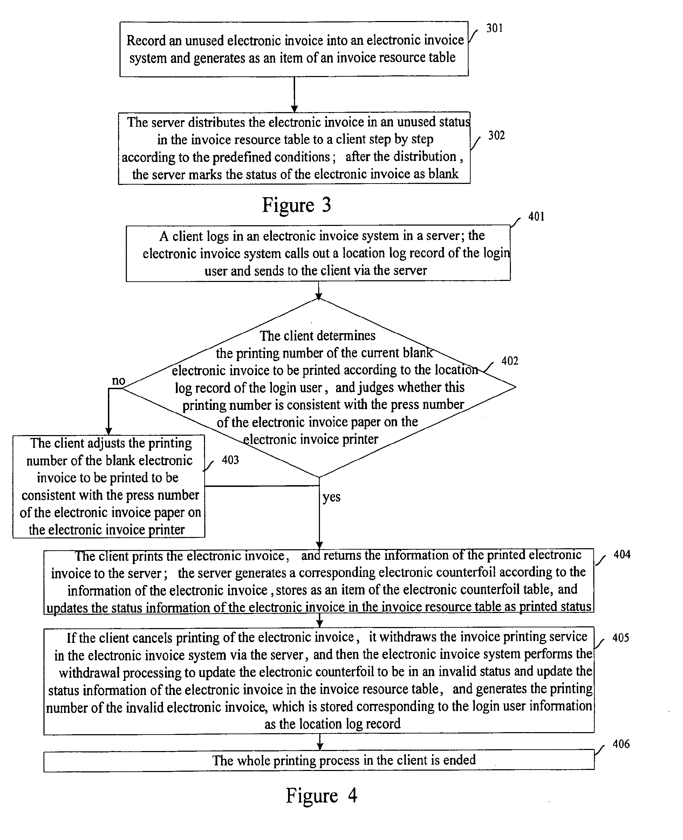

Figure 3 shows the flowchart of a method for the resource management of the electronic invoice according to an embodiment of the invention, including the following steps:

Step 301: A server records an unused electronic invoice into an electronic invoice system and generates as an item in an invoice resource table.

Step 302: The server distributes, according to the predefined conditions, the electronic invoice identified as in an unused status in the invoice resource table to a client step by step; after the distribution, the server marks the status of the electronic invoice distributed as blank;

in this step, the predefined condition may be distribution based on a number segment; distributing step by step indicates that the server exchanges information directly or indirectly with a plurality of clients in different levels to distribute the invoices according to the sequence of levels of the clients until the client in lowest level.

In the embodiment of the invention, if the recorded electronic invoice in unused status is not to be used due to a certain reason, an invalid status mark is made in the item corresponding to the electronic invoice in the invoice resource table.

Second part: usage flow of the electronic invoice

Figure 4 shows a flowchart of using an electronic invoice according to an embodiment of the invention, including the following steps:

Step 401: A client logs in an electronic invoice system in a server; the electronic invoice system calls out a location log record of the login user and sends to the client via the server;

in this step, the location log record of the login user is the related information of the last printed electronic invoice stored in the database by the electronic invoice system, including the printing number of the printed electronic invoice corresponding to the login user information, remaining blank electronic invoices and other related information.

Step 402: The client determines the printing number of the current blank electronic invoice to be printed according to the location log record of the login user, and judges whether this printing number is consistent with the press number on the electronic invoice paper in the electronic invoice printer; if they are not consistent with each other, it proceeds to step 403; otherwise, it turns to step 404.

Step 403: The client adjusts the printing number of the blank electronic invoice to be printed to be consistent with the press number on the electronic invoice paper in the electronic invoice printer, then it proceeds to step 404;

in this step, the adjustment procedure includes that the client sets the starting number of the blank electronic invoice to be printed, i.e. adjusts the starting number to be the press number on the first electronic invoice paper on the printer.

Step 404: The client prints the electronic invoice, and returns the information of the printed electronic invoice to the server; the server generates a corresponding electronic counterfoil according to the information of the electronic invoice, stores it as an item of the electronic counterfoil table, and updates the status information of the electronic invoice in the invoice resource table as a printed status; and the server obtains, according to the information of the electronic invoice, the printing number of the printed electronic invoice, which is stored as the location log record corresponding to the login user information,.

Step 405: If the client cancels printing of the electronic invoice, it rolls back the invoice printing service in the electronic invoice system via the server, and then the electronic invoice system performs the rollback processing to update the electronic counterfoil to be in an invalid status and update the status information of the electronic invoice in the invoice resource table, and generates the printing number of the invalid electronic invoice, which is stored as the location log record corresponding to the login user information.

Step 406: The whole printing process in the client is ended.

In this embodiment of the present invention, if other users log in the electronic invoice system via the client, the same process as show in Figure 4 is performed.

Third part: automatic association flow between electronic invoice and electronic counterfoil

In prior art, the invoice is printed in two pages or multiple pages. The invoice is not the part managed by the management system, and no configuration is needed in printing the invoice. However, in the embodiment of the present invention, when using the electronic invoice system, the electronic counterfoil is to be associated with the electronic invoice, and the press number of the electronic invoice should be consistent with the printing number of the electronic counterfoil, this may guarantee the correctness of the electronic counterfoil.

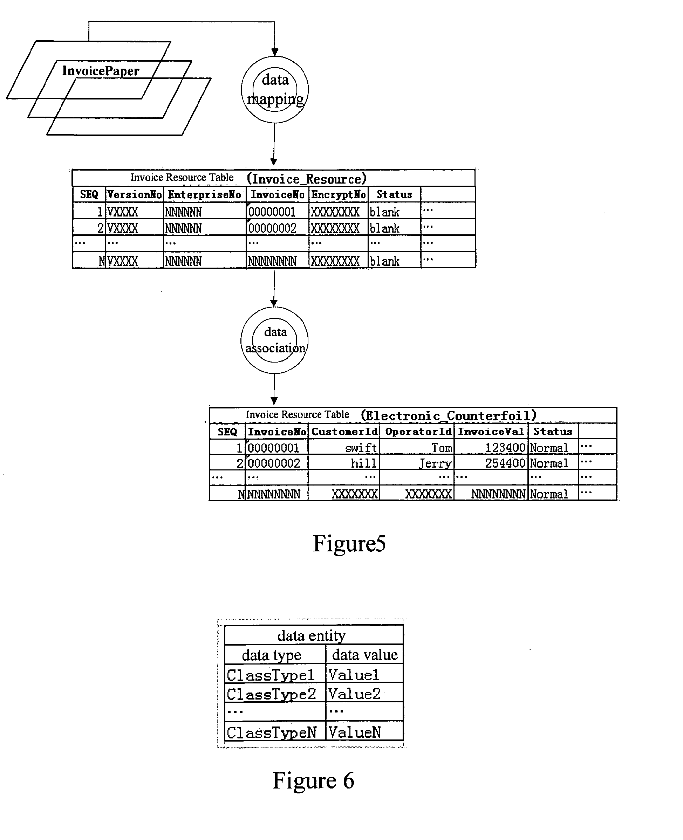

Figure 5 shows a diagram of an associated structure between an electronic invoice and an electronic counterfoil according to an embodiment of the invention. In this figure, the information of paper invoice printed is mapped into the electronic invoice system as an item of the invoice resource table. The electronic invoice is associated in the form of resources. Each time a paper invoice in one page is printed, the corresponding record in the invoice resource table is processed to be "printed" from "blank" status, and an electronic counterfoil corresponding to the paper invoice is generated in the electronic counterfoil table.

In the present invention, a key point for the electronic invoice system is that, how the electronic invoice system can be started to make the electronic counterfoil be associated automatically with the printed electronic invoice by a simple configuration without bringing an extra work to the operator. Two solutions are provided in the embodiments of the invention, which will be described in detail hereinafter.

The first solution is an automatic association flow between the electronic invoice and the electronic counterfoil based on a client session mode.

This solution is simple, because the initial value of the printing number of the electronic invoice is set in the client, and the location computing for printing the electronic invoice is completed by the client each time; in other words, each time when printing the electronic invoice, the client informs the server of the printing number of the electronic invoice to be printed; the server only needs to update the status of the invoice corresponding to the printing number to be in printed status in the invoice resource table, and sends the invoice printing response to the client end.

With this solution, the operating efficiency of the electronic invoice system is relatively high, which is adapted to the conditions that the printing number of the electronic invoice is consecutive integer. This solution also supports the cases that one user logs in multiple clients simultaneously or one client prints electronic invoices for multiple users simultaneously.

Figure 6 shows a structural diagram of an electronic invoice related information stored in a client to be printed according to an embodiment of the present invention, which includes a data entity of the electronic invoice including data type and data value. The data type corresponds to different information of the electronic invoice to be printed, and the data value is the particular information value. This structure is described with C/C++ language as follows:

```
                typedef struct SESSIONCATHEVAL
                  {
                    Char szOperatorId [32]; // login user number
                    int64 nSessionId ; //Session additional code
                    int64 nInvoiceNo ; //invoice number
                    int64 nRecptionNo ; //receipt number
                    int64 nBillItemNo ; //bill number
                    ....
                   };
                   SESSIONCATHEVAL stSessionCatheVal
```

As stated above, the various numbers of the electronic invoice are stored separately; when an electronic invoice is printed, stSessionCatheVal.nInvoiceNo is operated; when a receipt is printed, stSessionCatheVal.nRecptionNo is operated; and when a bill is printed, stSessionCatheVal.nBillItemNo is operated, etc.

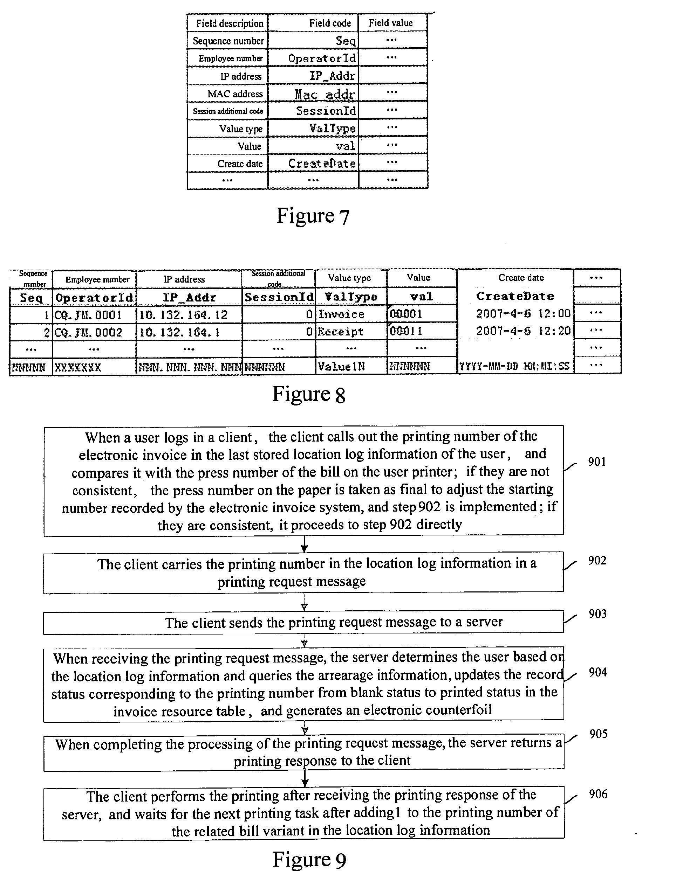

In the embodiment, the location log information of the login user corresponding to the printing number of the printed invoice (the initial value of the printing number may be set if it is the first printing) is stored in the client, and the storage structure is shown in Figure 7, including: an employee number, i.e. the member number of the login user; an Internet protocol (IP) address, i.e. the client address where the login user works; a Media Access Control (MAC) address, i.e. the network card address of the client where the login user works, which is unique to a client with a dynamic IP address; a session add-code, i.e. when a login user starts multiple clients, the system monitors automatically to identify the session when the client starts, for example, for the first start program, Session=0; for the second start program, Session=1 and the like; a data type, i.e. the type of the data stored currently, such as an electronic invoice, a receipt and a bill; and a data value, i.e. the data value of different types of data.

Figure 8 shows a sample diagram of the location log information for a login user stored in a client according to an embodiment of the present invention. When a login user exits the system, the information of the employee number, IP address, MAC address, session add-code, data value type and data value of the login user are recorded in the location log information, so that they may be called out for using when the user logs in next time.

Figure 9 shows a flowchart of a method for associating automatically an electronic invoice and an electronic counterfoil based on a client session mode according to an embodiment of the invention, including the following steps:

Step 901: When a user logs in a client, the client calls out the printing number of the electronic invoice in the last stored location log information of the user, and compares it with the press number of the bill on the user printer; if they are not consistent, the press number on the paper is taken as final to adjust the starting number recorded by the electronic invoice system, and step 902 is implemented; if they are consistent, it proceeds to step 902 directly.

Step 902: The client carries the printing number in the location log information in a printing request message.

Step 903: The client sends the printing request message to a server.

Step 904: When receiving the printing request message, the server determines the user based on the location log information and queries the arrearage information, updates the record status corresponding to the printing number from blank status to printed status in the invoice resource table according to the received printing number, and generates an electronic counterfoil, such as the user name and number, invoice value, invoice number, date issued and the operator;

in this step, the server may also stores the location log information of the user corresponding to the printing number into the database as the last location record.

Step 905: After completing the processing of the printing request message, the server returns a printing response to the client.

Step 906: The client performs the printing after receiving the printing response of the server, and waits for the next printing task after adding 1 to the printing number of the related bill variant in the location log information.

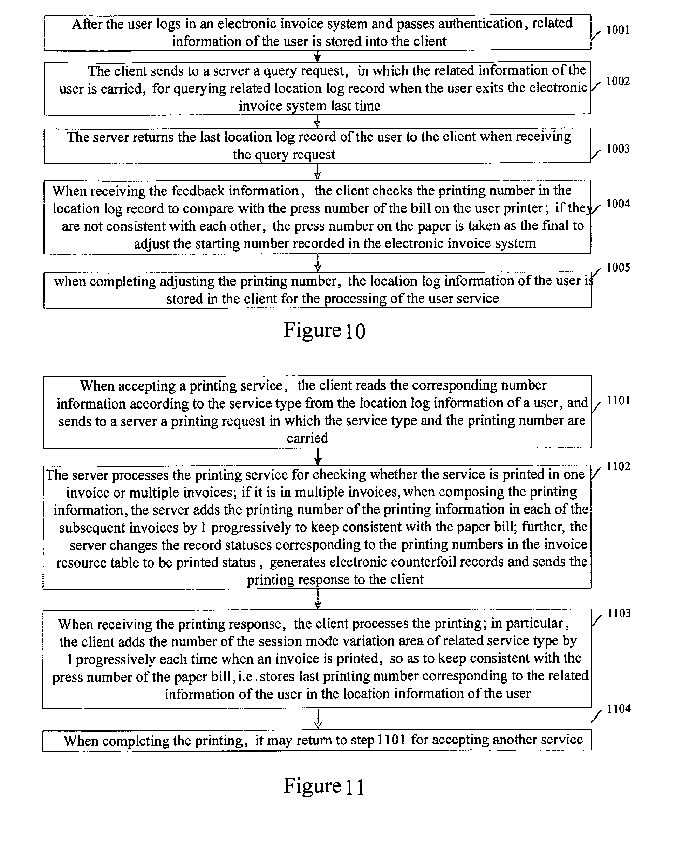

Figure 10 shows a diagram of an initial configuration sub-flow in a client session mode after user login according to an embodiment of the invention, including the following steps:

Step 1001: After the user logs in an electronic invoice system and passes authentication, related information of the user is stored into the client, for example, user information including the employee number, IP address, MAC address and organization are stored into a session mode variation area at the client.

Step 1002: The client sends to a server a query request, in which the related information of the user is carried, for querying related location log record when the user exits the electronic invoice system last time.

Step 1003: The server returns the last location log record of the user to the client after receiving the query request.

Step 1004: After receiving the feedback information, the client checks the printing number in the location log record to compare with the press number of the bill on the user printer; if they are not consistent with each other, the press number on the paper is taken as the final to adjust the starting number recorded in the electronic invoice system.

Step 1005; After completing adjusting the printing number, the client stores the location log information of the user (which may be used for location computing in next printing for the user), and processes the user service.

Figure 11 shows a flowchart of automatic location in printing an electronic invoice based on the client end session mode configuration according to an embodiment of the invention, including the following steps;

Step 1101: When accepting a printing service, the client reads the corresponding number information, such as invoice number, according to the service type from the location log information of a user, and sends to a server a printing request message in which the service type and the printing number are carried.

Step 1102: The server processes the printing service, such as checking whether the service is printed in one invoice or multiple invoices; for example, arrearages of several months may be settled up in one fee collection and multiple invoices may be printed; if it is in multiple invoices, when composing the printing information, the server takes the received printing number as the printing number of the first invoice, and adds the printing number of the printing information in each of the subsequent invoices by 1 progressively to keep consistent with the paper bill; further, the server changes the record statuses corresponding to the printing numbers in the invoice resource table from blank to printed, generates electronic counterfoil records and sends the printing response to the client;

in this step, the server may also stores the location log information of the user corresponding to the printing number into the database as the last location record of the user.

Step 1103: After receiving the printing response, the client processes the printing; in particular, the client adds the number of the session mode variation area of related service type by 1 progressively each time when an invoice is printed, so as to keep consistent with the press number of the paper bill, i.e. stores last printing number corresponding to the related information of the user in the location information of the user.

Step 1104: When completing the printing, the client may return to step 1101 for accepting another service.

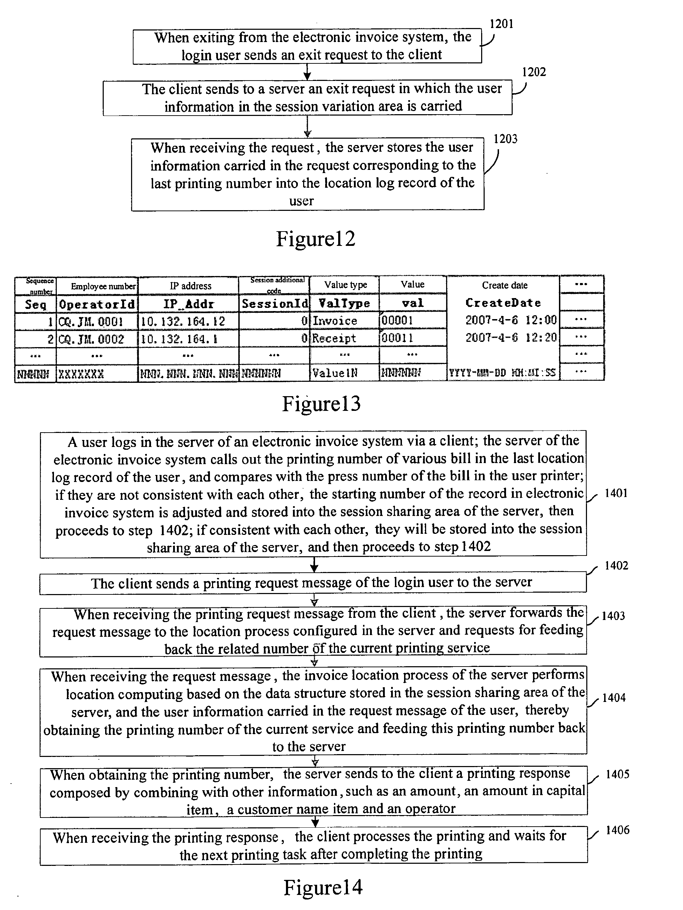

Figure 12 shows a flowchart of saving location log record in client when the login user exists the system according to an embodiment of the present invention, including the following steps:

Step 1201: When exiting from the electronic invoice system, the login user sends an exit request to the client.

Step 1202: The client sends to a server an exit request in which the user information, including the employee number, IP address, MAC address, electronic invoice number, receipt number and bill number of the user, in the session variation area is carried.

Step 1203: When receiving the exit request, the server stores the user information carried in the exit request into the location log record of the user, where the user information corresponds to the last printing number.

The second solution is an association flow between the electronic invoice and the electronic counterfoil based on a server electronic invoice location process mode.

This solution is relative complex, because the server needs to configure a dedicated location process for responsible for the location of an electronic invoice number, each time when an electronic invoice is printed, the configured location process performs the location computing based on last invoice number (or the initial invoice number set by the login user) and the user information carried in a printing request message sent from the client, to obtain the printing number of the current printing invoice (which should be consistent with the press number of the paper electronic invoice); and the server sends a printing response in which the printing number of the invoice is carried to the user. Further, the server records the current printing number of the login user serving as the basis of the location computing of the next printing request.

This solution has the following characteristics that, when logging in the electronic invoice system, the login user makes an initial configuration of the starting number of the invoice which is stored in the server, and the automatic association between the electronic invoice printing and the electronic counterfoil is processed in the server which is adapted to the cases that the electronic invoice number is a non-integer character string.

Figure 13 shows a diagram of data structure stored in the location process configured in a server according to an embodiment of the present invention. As shown in the figure, the data structure is substantially the same with the structure of the location log record. In order to accelerate the operation speed and improve the performance of the electronic invoice system, the last location log record of the login user may be stored in the session sharing area of the server (a location process is configured in the session sharing area) to decrease the query to the database of the server in each location, and access the session sharing area of the server directly.

The data stored in the session sharing area of the server is consistent with that in the database. If the hardware resources of the electronic invoice system are well enough, the database of the server may be operated directly to update the location log record and also to query from the location log record without enabling the session sharing area of the server, so as to simplify the process deployment.

Figure 14 shows an integral flowchart of invoice location in a server according to an embodiment of the invention, including the following steps:

Step 1401: A user logs in the server of an electronic invoice system via a client; the server of the electronic invoice system automatically calls out the printing number of various bill in the last location log record of the user, and compares with the press number of the bill on the user printer; if they are not consistent with each other, the press number on the paper is taken as the final to adjust the starting number of the record in electronic invoice system and stores into the session sharing area of the server, then proceeds to step 1402; if consistent with each other, they will be stored into the session sharing area of the server, and then proceeds to step 1402.

Step 1402: The client sends a printing request message of the login user to the server.

Step 1403: Then receiving the printing request message from the client, the server forwards the printing request message to the location process configured in the server and requests that the location process feeds back the related number of the current printing service, such as the printing number of the electronic invoice.

Step 1404: When receiving the printing request message, the invoice location process of the server performs location computing ,based on the data structure stored in the session sharing area of the server, i.e. the printing number of the printing bill of the login user buffered last time (or the initial printing number configured by the login user) and the user information carried in the request message of the user, to obtain the printing number of the current service (which should be consistent with the press number of the paper on the printer of the client) and feeding this printing number back to the server.

Step 1405: When obtaining the printing number, the server sends to the client a printing response composed by combining with other information, such as an amount, an amount in capital item, a customer name item and an operator;

in this step, the server changes the record status corresponding to the printing number from blank to printed in the invoice resource table, and generates an electronic counterfoil record.

Step 1406: When receiving the printing response, the client processes the printing and waits for the next printing task after the printing.

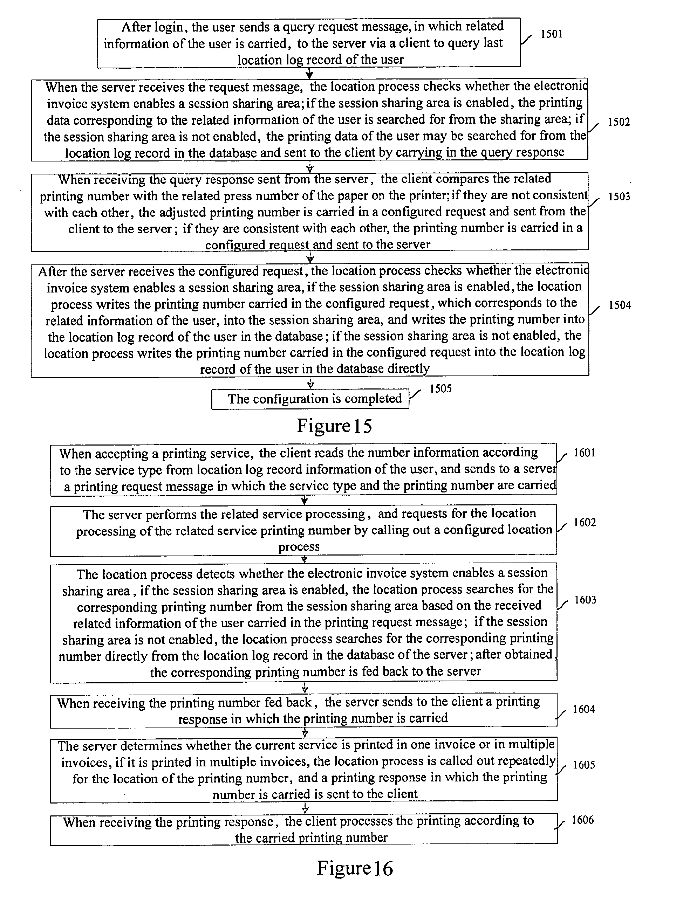

Figure 15 shows a diagram of an initial configuration sub-flow based on a server electronic invoice location process mode after user login according to an embodiment of the present invention, including the following steps:

Step 1501: After login, the user sends a query request message, in which related information of the user is carried, to the server via a client to query last location log record of the user;

Step 1502: When receiving the request message, the server forwards it to the configured location process, and the location process checks whether the electronic invoice system enables a session sharing area; if the session sharing area is enabled, the printing data corresponding to the related information of the user is searched for from the sharing area and carried in a query response to be sent to the client; if the session sharing area is not enabled, the printing data of the user may be searched for from the location log record in the database and sent to the client by carried in the query response;

Step 1503: When receiving the query response sent from the server, the client compares the related printing number, such as the printing number of an electronic invoice or the printing number of a receipt, with the related press number of the paper on the printer; if they are not consistent with each other, the press number of the paper is taken as the final for adjusting, and the adjusted printing number is carried in a configured request and sent from the client to the server; if they are consistent with each other, the printing number is carried in a configured request and sent to the server;

Step 1504: After receiving the configured request, the server forwards it to a configured location process; the location process checks whether the electronic invoice system enables a session sharing area, if the session sharing area is enabled, the location process writes the printing number carried in the configured request, which corresponds to the related information of the user, into the session sharing area, and writes the printing number into the location log record of the user in the database; if the session sharing area is not enabled, the location process writes the printing number carried in the configured request into the location log record of the user in the database directly; and

Step 1505: The configuration is completed.

Figure 16 shows a flowchart of automatic location in printing an electronic invoice based on a server electronic invoice location process mode according to an embodiment of the present invention, including the following steps:

Step 1601: When performing a printing service, a login user sends to a server, via a client, a printing request message in which related information of the login user, such as the employee number of the login user, IP address, MAC address, service type and customer number are carried;

Step 1602: The server performs the related service processing, and requests for the location processing of the related service printing number by calling out a configured location process;

Step 1603: The location process detects whether the electronic invoice system enables a session sharing area, if the session sharing area is enabled, the location process searches for the corresponding printing number from the session sharing area based on the received related information of the user carried in the printing request message; if the session sharing area is not enabled, the location process searches for the corresponding printing number directly from the location log record in the database of the server;

after being obtained, the corresponding printing number is fed back to the server;

Step 1604: When receiving the printing number fed back, the server sends to the client a printing response in which the printing number is carried;

in this step, the server changes the record status corresponding to the printing number from blank to printed in the invoice resource table, and generates an electronic counterfoil record;

Step 1605: The server determines whether the current service is printed in one invoice or in multiple invoices, if it is printed in multiple invoices, the location process is called out repeatedly for the location of the printing number, and a printing response in which the printing number is carried is sent to the client; and

Step 1606: When receiving the printing response, the client processes the printing according to the carried printing number.

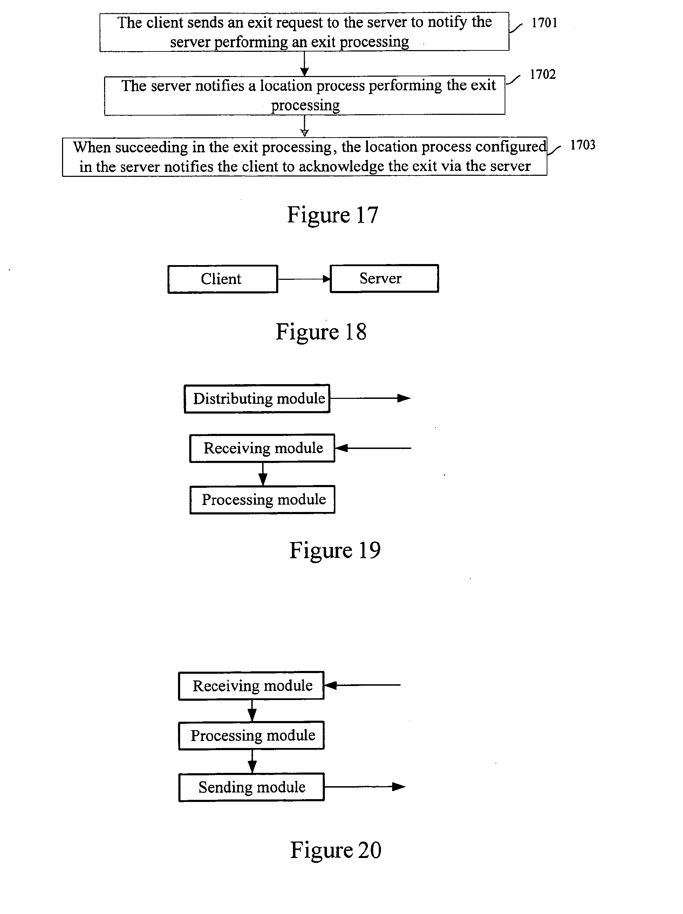

Figure 17 shows a diagram of storing login information sub-flow after a login user exits the electronic invoice system based on a server electronic invoice location process mode according to an embodiment of the present invention, including the following steps:

Step 1701: The client sends an exit request to the server to notify the server to exit;

Step 1702: The server notifies a location process to exist;

the location process detects if the electronic invoice system enables a session sharing area; if the session sharing area is enabled, the location process marks an offline sign in the information of the current session sharing area of the login user, so that in case of the sharing area is not large enough, related space may be reused, and a data synchronizing process may be triggered to write the related information into the database of the server; if the session sharing area is not enabled, the location process updates the location log record in the server;

Step 1703: When succeeding in the exit processing, the location process configured in the server notifies the client to acknowledge the exit via the server.

The embodiment of the present invention further provides a system for realizing an electronic bill, as shown in Figure 18, this system includes a client and a server; in particular,

the client is adapted to receive an invoice distributed from the server for printing and/or handing in for cancellation and send information of the invoice printed and/or handed in for cancellation to the server; and

the server is adapted to distribute an invoice to the client and generate a corresponding electronic counterfoil based on the invoice information received from the client for storage.

In the embodiment of the invention, the server further includes an invoice resource table storage module adapted to store an invoice resource table provided with invoice information, distribute an invoice in unused status in the invoice resource table to the client and update the information of the invoice distributed to the client to be blank status, and update the invoice information in the invoice resource table according to the invoice information received from the client.

The server further includes an electronic counterfoil storage module adapted to store a generated electronic counterfoil.

The server further includes a location log record storage module and a location computing module; in particular, the location log record storage module is adapted to store a location log record, and provide the location computing module in the server with the location log record for computing the printing number of an invoice to be printed currently and send to the client; after receiving the printing number, the client prints the invoice to be printed currently according to the printing number.

In the embodiment of the invention, the server also includes a location log record storage module, and the client also includes a location computing module; in particular, the location log record storage module is adapted to store a location log record, provide the location computing module in the client with the location log record for computing the printing number of an invoice to be printed currently, and print the invoice to be printed currently according to the printing number.

The embodiment of the invention further provides a server for realizing an electronic bill, as shown in Figure 19, the server includes a distributing module, a receiving module and a processing module; in particular,

the distributing module is adapted to distribute an invoice to a client;

the receiving module is adapted to receive information of an invoice printed and/or handed in for cancellation and send to the processing module; and

the processing module is adapted to generate an electronic counterfoil for storage according to the information of the invoice received from the receiving module.

In the embodiment of the invention, the server also includes an invoice resource table storage module adapted to store an invoice resource table provided with invoice information, distribute an invoice in unused status in the invoice resource table to the distributing module and update the information of the invoice distributed to the distributing module to be blank status, and update the invoice information in the invoice resource table according to the invoice information received from the receiving module; in this case, the receiving module further needs to send the invoice information to the invoice resource table storage module.

The server further includes an electronic counterfoil storage module adapted to store a generated electronic counterfoil.

The server further includes a location log record storage module and a location computing module; in particular, the location log record storage module is adapted to store a location log record, and provide the location computing module in the server with the location log record or send the location log record directly; the location computing module in the server is adapted to compute the printing number of an invoice to be printed currently according to the location log record and send.

The embodiment of the invention further provides a client for realizing an electronic bill, as shown in Figure 20, the client includes a receiving module, a processing module and a sending module; in particular,

the receiving module is adapted to receive an invoice distributed and send to the processing module;

the processing module is adapted to print an invoice and/or hand in an invoice for cancellation and send information of the invoice printed and/or handed in for cancellation to the sending module; and

the sending module is adapted to send the information of the invoice printed and/or handed in for cancellation.

In the embodiment of the invention, the client further includes a location computing module adapted to compute the printing number of an invoice to be printed currently according to the location log record, or receive the printing number of an invoice to be printed currently via the receiving module, and print the invoice to be printed currently according to the printing number.

The embodiment of the invention is not limited to the electronic processing process of the invoice; in a particular implementation, various bills of operators may also be managed electronically in this way. In this case, the system configured in the server is an electronic bill system which includes a bill resource table and an electronic counterfoil table. The two solutions described above in the embodiments of the invention may also be used in location computing. At this time, the printing number of various bill is required to be computed according to the bill type.

It can be seen from above, the method, system and device in the embodiments of the invention are advantageous in that: 1) An electronic bill in one page is used and the electronic bill is associated with an electronic counterfoil, which is convenient for checking and saves a large amount of bill costs; 2) resource-like management is performed on the bills which improves bill management level; 3) the association relation between the electronic counterfoil and the paper bill printed based on the electronic bill is established, which makes ready for the E-tax declaration; 4) the electronic bill system may provide a synchronous or asynchronous E-tax declaration interface; and 5) electronic counterfoils are managed electronically which decreases the amounts of counterfoils in paper, thus saves the operating cost.

The above are the illustration of the embodiments of the present invention. The method in the invention may be improved appropriately in the implementation to be adaptive to the particular demands. Therefore, it may be appreciated the embodiments according to the invention is only exemplary, but not used for limiting the scope of the invention.

## Claims

1. A method for realizing an electronic bill, **characterized by** comprising,
distributing an unused bill to a client;
determining a bill number by performing, according to an output bill request message sent from the client, location computing and sending the bill number to the client;
generating an electronic counterfoil of the bill according to bill information from the client after the client outputs the bill; and
associating the bill outputted with the electronic counterfoil to keep the bill number recorded in the electronic counterfoil to be consistent with the bill number outputted.

2. The method according to claim 1, **characterized in that**, determining the bill number by performing, according to an output bill request sent from the client, location computing and sending the bill number to the client comprises,
configuring a location process for the location of an electronic bill number; and
performing the location computing based on user information, carried in a printing request message sent from the client, and last outputted bill number, to obtain the number of a current printing bill; sending to the client a response message in which the output number of the bill is carried; and recording the current output number of the login user used in bill number location for the next output bill request.

3. The method according to claim 1, **characterized by** further comprising,
storing the bill information of the bill in a server, wherein the bill information comprises a bill number, type, version number and bill status;

4. The method according to claim 3, **characterized by** further comprising,
updating the bill status of a stored bill in unused status to be blank after the stored bill in unused status is distributed; and
after receiving the bill information of the outputted bill fed back from the client end, updating the bill status of the stored bill according to the bill information.

5. The method according to claim 1, **characterized by** further comprising,
obtaining a location log record corresponding to user information stored in a server and storing into a session sharing area of the server; and
sending the printing number of the bill to be printed currently after performing the location computing according to the location log record corresponding to the user information which is stored in the session sharing area of the server.

6. The method according to claim 1, **characterized by** further comprising,
saving the electronic counterfoil generated;
wherein the electronic counterfoil comprises at least one of the following information, a customer name, bill amount, bill number and date issued.

7. A method for realizing an electronic bill, **characterized by** comprising,
receiving, by a client, a bill distributed from a server;
generating, by the client, bill information after outputting the received bill; and
sending, by the client, the generated bill information to the server.

8. The method according to claim 7, **characterized by**, before outputting a distributed bill, further comprising,
performing the location computing to obtain the output number of the bill to be outputted currently, and comparing whether the output number is consistent with a press number on the bill printing paper; if they are consistent with each other, printing the bill; otherwise, adjusting the printing number to be consistent with the press number on the bill printing paper, then printing the bill.

9. The method according to claim 8, **characterized in that**, performing the location computing to obtain the output number of the bill to be outputted currently comprises,
obtaining a stored location log record from a server according to user information of a login user and storing; obtaining the output number of the bill outputted according to the stored location log record, and performing the location computing to obtain the output number of the bill to be outputted currently; or
receiving the output number of the bill to be outputted currently sent from the server.

10. The method according to claim 9, **characterized by**, before obtaining the stored location log record from a server according to user information of a login user, further comprising,
determining whether the location log record is stored in the client; if the location log record is stored in the client a location process configured in the client end obtains the output number of the outputted bill according to the stored location log record, and performs the location computing to obtain the output number of the bill to be outputted currently; otherwise, obtaining the stored location log record from the server according to the user information of the login user.

11. A system for realizing an electronic bill, **characterized by** comprising a client and a server, wherein,
the client is adapted to receive a bill distributed from the server, output the bill according to a request, and send bill information of the outputted bill to the server; and
the server is adapted to distribute the bill to the client; generate a corresponding electronic counterfoil according to the bill information received from the client to store; associate the bill outputted from the client with the electronic counterfoil to keep the bill number recorded in the electronic counterfoil to be consistent with the bill number outputted.

12. The system according to claim 11, **characterized in that**, the server further comprises,
an invoice resource table storage module, adapted to store a bill resource table provided with bill information, update the information of a bill distributed to the client to be blank status after a bill in unused status in the invoice resource table is distributed to the client, and update the bill information in the bill resource table according to the bill information received from the client.

13. The system according to claim 11, **characterized in that**, the server further comprises an electronic counterfoil storage module adapted to store the generated electronic counterfoil.

14. The system according to claim 11, **characterized in that,** the server further comprises a location log record storage module and a location computing module, wherein,
the location log record storage module is adapted to store a location log record, and provide the location computing module with the location log record;
the location computing module is adapted to compute the output number of a bill to be printed currently according to the location log record, and send to the client; and
when receiving the output number, the client outputs the bill to be outputted currently according to the output number.

15. The system according to claim 11, **characterized in that**, the server further comprises a location log record storage module, and the client further comprises a location computing module, wherein,
the location log record storage module is adapted to store a location log record, and provide the location computing module with the location log record;
the location computing module is adapted to compute the printing number of a bill to be printed currently, and output the bill to be outputted currently according to the output number.

16. A server for realizing an electronic bill, **characterized by** comprising a distributing module, a receiving module and a processing module, wherein,
the distributing module is adapted to distribute a bill to a client;
the receiving module is adapted to receive bill information of an outputted bill and send the bill information to the processing module; and
the processing module is adapted to generate a corresponding electronic counterfoil to be stored according to the bill information received by the receiving module.

17. The server according to claim 16, **characterized in that**, the server further comprises,
an invoice resource table storage module adapted to store a bill resource table provided with bill information, distribute a bill in unused status in the bill resource table to the distributing module and update the information of the bill distributed to the distributing module to be blank status, and update the bill information in the bill resource table according to the bill information received by the receiving module; wherein
the receiving module is adapted to send the bill information to the bill resource table storage module.

18. The server according to claim 16, **characterized in that**, the server further comprises,
an electronic counterfoil storage module adapted to store the generated electronic counterfoil.

19. The server according to claim 16, **characterized in that,** the server further comprises a location log record storage module and a location computing module, wherein,
the location log record storage module is adapted to store a location log record, and provide the location computing module with the location log record or send the location log record directly; and
the location computing module is adapted to compute the output number of a bill to be outputted currently according to the location log record.

20. A client for realizing an electronic bill, **characterized by** comprising a receiving module, a processing module and a sending module, wherein,
the receiving module is adapted to receive a distributed bill and send the distributed bill to the processing module;
the processing module is adapted to obtain bill information according to a request and output the bill, and send the outputted bill information to the sending module; and
the sending module is adapted to send the bill information of the outputted bill.

21. The client according to claim 20, **characterized in that**, the client further comprises,
a location computing module adapted to compute the output number of a bill to be outputted currently according to a location log record, or receive the output number of the bill to be outputted currently directly via the receiving module, and output the bill according to the output number.
